# EUROPÄISCHE PATENTSCHRIFT

(11) **EP 3 682 528 B1**
(45) Veröffentlichungstag und Bekanntmachung des Hinweises auf die Patenterteilung: **06.08.2025**
(21) Anmeldenummer: 18759912.1
(22) Anmeldetag: 21.08.2018
(51) Int. Cl.: H02K 3/52, H02K 3/18, H02K 15/095, H02K 3/28, H02K 15/33

(54) **STATOR FÜR EINE ELEKTRISCHE MASCHINE, EINE ELEKTRISCHE MASCHINE UND VERFAHREN ZUM HERSTELLEN EINES SOLCHEN STATORS**
STATOR FOR AN ELECTRICAL MACHINE, ELECTRICAL MACHINE, AND METHOD FOR PRODUCING SUCH A STATOR
STATOR DESTINÉ À UN MOTEUR ÉLECTRIQUE, EN PARTICULIER D'UN VÉHICULE AUTOMOBILE, AINSI QUE PROCÉDÉ DE FABRICATION DUDIT STATOR

(30) Priorität: 12.09.2017 DE 102017216080
(43) Veröffentlichungstag der Anmeldung: 22.07.2020
(73) Patentinhaber: Robert Bosch GmbH, 70442 Stuttgart (DE)
(72) Erfinder: KOCH, Roman, 76337 Waldbronn (DE); CSOTI, Janos Tamas, 76139 Karlsruhe (DE); BIRCAN, Taner, 75177 Pforzheim (DE)
(86) Internationale Anmeldenummer: PCT/EP2018/072481
(87) Internationale Veröffentlichungsnummer: WO 2019/052783

(56) Entgegenhaltungen:
- EP-A2- 1 677 404
- EP-A2- 3 007 330
- WO-A1-2012/056714
- DE-A1- 102015 200 095
- US-A1- 2009 121 566
- US-A1- 2016 036 278

## Beschreibung

Die Erfindung bezieht sich auf einen Stator für eine elektrische Maschine, sowie auf eine elektrische Maschine und auf ein Verfahren zum Herstellen eines solchen Stators nach der Gattung der unabhängigen Ansprüche.

### Stand der Technik

Mit der DE 10 2012 224 153 A1 ist ein Stator einer elektrischen Maschine bekannt geworden, bei dem axial auf ein Lamellenpaket eine Isolierlamelle und eine Verschaltungsplatte angeordnet sind. Der Stator ist beispielsweise mittels Nadelwickeln bewickelt, wobei die einzelnen Teilspulen mittels Verbindungsdrähten am äußeren Umfang der Verschaltungsplatte miteinander verbunden sind. Dabei wird die gesamte Wicklung in einem Stück mittels eines einzigen Wicklungsdrahtes durchgewickelt. Da die Verbindungsdrähte zwischen den einzelnen Spulen axial übereinader angeordnet sind, ist die axiale Bauhöhe des Stators relativ groß. Außerdem ist der Aufwand für das Verschweißen der Verschaltungsplatte mit den Verbindungsdrähten sehr aufwändig. Diese Nachteile sollen durch die erfindungsgmäße Lösung behoben werden. Andere Statoren sind aus EP3007330 A2, DE102015200095 A1, US2009/121566 A1, WO2012/056714 A1, US2016/036278 A1 und EP1677404 A2 bekannt.

### Offenbarung der Erfindung

### Vorteile der Erfindung

Die erfindungsgemäße Vorrichtung und das erfindungsgemäße Verfahren mit den Merkmalen der unabhängigen Ansprüche 1 und 13 hat demgegenüber den Vorteil, dass durch die Ausformung von Aufnahmetaschen an der Isolierlamelle die Schneid-Klemm-Verbindungen der Verschaltungsplatte direkt in diese Aufnahmen eingefügt werden können, um den Wicklungsdraht zu kontaktieren. Dadurch können die einzelnen Spulen vorteilhaft mit einem einzigen Wicklungsdraht ohne Unterbrechung nacheinander gewickelt werden und danach mittels der Verschalteplatte gemäß einer gewünschten Verschaltung elektrisch miteinander verschaltet werden. Wird der Wicklungsdraht nach dem Wickeln jeder Einzelspule auf dem Weg zur nächsten Spule direkt durch die Aufnahmetasche gelegt, entsteht ohne Zusatzaufwand beim Wickeln eine Schnittstelle zur Verschalteplatte, die eine große Variationsbreite für die Verschaltung zur Verfügung stellt. Beim Einfügen der Schneid-Klemm-Elemente in die Aufnahmetaschen wird eine elektrische Kontaktierung der Spulen hergestellt, ohne dass weitere stoffschlüssige Verbindungsprozesse notwendig sind.

Durch die in den abhängigen Ansprüchen aufgeführten Maßnahmen sind vorteilhafte Weiterbildungen und Verbesserungen der in den unabhängigen Ansprüchen vorgegebenen Ausführungen möglich. Besonders günstig ist es, wenn jeder Einzelspule genau eine Aufnahmetasche zugeordnet ist, wobei für den Drahtanfang vor Beginn des Wickelns eine zusätzliche Aufnahmetasche zur Verfügung gestellt wird. Dabei sind die Aufnahmetaschen für den Drahtanfang und das Drahtende bevorzugt direkt unmittelbar nebeneinander in Umfangsrichtung angeordnet. Bei einem Stator mit beispielsweise zwölf Statorzähnen sind hierbei 13 Aufnahmetaschen an der Isolierlamelle ausgebildet. Die Aufnahmetaschen weisen in Umfangsrichtung eine größere Erstreckung auf als in Radialrichtung. Dabei wird der Wicklungsdraht von einer ersten Spule radial durch die Aufnahmetasche an die radiale Außenseite des Stators geführt und anschließend in eine in Umfangsrichtung benachbarte Freisparung radial wieder nach innen zum nächsten Statorzahn geführt. Dadurch sind zwei benachbarte Spulen mittels des Verbindungsabschnitts des Wicklungsdrahtes an der radialen Außenseite der Isolierlamelle auf direktem kürzesten Wege miteinander verbunden.

In einer bevorzugten Ausführung wird in Umfangsrichtung ein Statorzahn nach dem anderen in unmittelbarer aufeinanderfolgender Reihenfolge in Umfangsrichtung bewickelt. Die Spulen werden besonders günstig mittels Nadelwickeln gefertigt, wobei jeweils auf einem Statorzahn genau eine Spule gewickelt ist. Durch die Wickelreihenfolge jeweils unmittelbar benachbarter Statorzähne erstrecken sich die Verbindungsabschnitte des Wickeldrahts jeweils nur über den Umfangswinkel der Statornuten. Dadurch wird verhindert, dass die Verbindungsabschnitte zwischen verschiedenen Spulen axial übereinander angeordnet werden, wodurch axialer Bauraum eingespart wird.

Um das Nadelwickelverfahren zu optimieren, sind die Freisparungen, in denen der Verbindungsdraht zum nächsten Statorzahn geführt wird, so breit ausgebildet, dass die Wickelnadel radial durch diese Freisparung hindurch passt, ohne axial über die Isolierlamelle angehoben werden zu müssen. Dadurch kann der Wicklungsdraht unmittelbar an der Seitenwand der Freisparung mittels der Wickelnadel abgelegt werden, wodurch dieser genauer positioniert ist und gleichzeitig Schnelligkeit beim Wickelprozess gewonnen wird, indem auf die Höhenbewegung der Wickelnadel beim Einlegen in die Freisparung verzichtet wird.

Hingegen ist beim Einlegen des Wicklungsdrahts in die Aufnahmetasche ein axiales Anheben der Wickelnadel über die Aufnahmetasche notwendig, da in der Aufnahmetasche ein relativ schmaler Spalt als radialer Durchbruch ausgebildet ist, in dem der Wickeldraht festgeklemmt werden soll. Dadurch wird hier die Wickelnadel beim radialen Verfahren über den Außenumfang des Stators hinaus zuerst axial über die Aufnahmetasche angehoben und radial außerhalb der Aufnahmetasche dann axial wieder abgesenkt. Hierzu wird beispielsweise die Wickelnadel nach dem Bewickeln des Statorzahns um einen Winkel von insbesondere etwa 90° verkippt, um den Wicklungsdraht an der radialen Außenfläche der Isolierlamelle bis zur nächsten Freisparung in Umfangsrichtung anzulegen. Die Aufnahmetasche weist zwei radiale Wände auf, zwischen die das Schneid-Klemm-Elementz axial eingefügt wird. In beide radiale Wände ist der axiale Schlitz ausgebildet, der sich bevorzugt axial nach unten verjüngt, damit der Wicklungsdraht am axialen Grund des axialen Schlitzes zuverlässig festgeklemmt wird.

Die Schlitze in der Aufnahmentasche und die breitere Freisparung wirken beide als radiale Führungselemente für den Verbindungsdraht zwischen zwei Spulen. Die Außenseite der Aufnahmetasche ist in Umfangsrichtung bis zu der Freisparung verlängert, so dass diese die Führung in Umfangsrichtung bildet. Dabei geht die in Umfangsrichtung verlängerte radiale Außenwand an der Freisparung in Radialrichtung in die Seitenwand der Freisparung über, so dass der Verbindungsdraht sowohl an der radialen Außenseite als auch an der Seitenwand der Freisparung fest anliegt. Durch das Wickeln der nächsten Spule um den nächsten Statorzahn wird eine Zugspannung im Bereich des Verbindungsdrahts aufrechterhalten, wodurch Schwingungen und dadurch eine Beschädigung der Verbindungsdrahtabschnitte verhindert wird.

Ein solches Wickelverfahren eignet sich besonders auch für einen sogenannten verschränkten Stator, bei dem die Statorzähne axial nicht parallel zur Statorachse angeordnet sind, sondern in Umfangsrichtung schräg zur Statorachse verlaufen. Ein solch verschränkter Stator wird beispielsweise mittels Blechlamellen realisiert, die jeweils in Umfangsrichtung geringfügig gegeneinander verdreht aufeinandergestapelt sind. Die einzelnen Blechlamellen bilden zusammen das Statorpaket, das einen in Umfangsrichtung geschlossenen Rückschlussring aufweist, an dem sich radial die Statorzähne anschließen.

Der Drahtanfang und das Drahtende des Wicklungsdrahts werden besonders günstig an der radialen Außenseite der Führungselemente derart fixiert, dass sie nach dem Einfügen in das Motorgehäuse keinen Kontakt mit dessen Innenfläche haben. Dazu sind beispielsweise an der radialen Außenseite der Führungselemente Rastelemente angeformt, in die die Enden des Drahts eingepresst werden. Beispielsweise ist an der Isolierlamelle bezüglich der Axialrichtung auf einer Seite ein Rastelement und axial gegenüberliegend zwei Rastelemente angeformt, zwischen denen der Wickeldraht eingelegt wird. Dabei ist das Rastelement auf der einen Seite in Umfangsrichtung genau zwischen den beiden anderen Rastelementen auf der axial anderen Seite angeordnet, so dass der Wicklungsdraht an den beiden Übergängen in Umfangsrichtung zwischen den einzelnen Rastelementen verklemmt wird. Zumindest ein Rastelement erstreckt sich in Radialrichtung weiter nach außen als der eingeklemmte Wicklungsdraht, wodurch der Wicklungsdraht radial zur Innenwand des Motorgehäuses beabstandet angeordnet, und damit isoliert ist.

In einer alternativen Ausführung sind an der Isolierlamelle sich axial erstreckende Rillen ausgebildet, in die hinein die Enden des Wicklungsdrahts eingepresst werden. Dabei sind die Rillen in Radialrichtung tiefer als der Durchmesser des Wicklungsdrahts, so dass nach dem Einpressen des Wicklungsdrahts dieser den radialen Umfang der Isolierlamelle nicht überschreitet. Entweder werden die Drahtenden in die axiale Spalte eingeklemmt und sind dadurch zuverlässig beabstandet zur Innenseite des Motorgehäuses angeordnet. Es ist jedoch auch möglich, dass axiale Laschen der Verschalteplatte radial außerhalb der Drahtenden in die axialen Rillen eingreifen, um eine Isolierschicht zur Innenwand des Motorgehäuses zu bilden.

Zur Verschaltung der einzelnen Spulen wird auf die Isolierlamelle axial eine Verschalteplatte aufgepresst. In der Verschalteplatte sind ringförmige Leiterstreifen angeordnet, die bevorzugt als Biegestanzteile einstückig mit daran angeformten Schneid-Klemm-Elementen ausgebildet sind. Die Schneid-Klemm-Elemente erstrecken sich in Axialrichtung über die Leiterstreifen hinaus und werden jeweils in die Aufnahmetaschen axial eingepresst, in denen der Wicklungsdraht in Radialrichtung angeordnet ist. Beim axialen Einfügen der Schneid-Klemm-Elemente umgreift der Gabelkontakt der Schneidklemme den Wicklungsdraht in der Aufnahmetasche und schneidet sich in den Wicklungsdraht ein, um einen elektrischen Kontakt herzustellen. An den einzelnen Leiterstreifen sind erfindungsgemäß elektrische Phasenanschlüsse angeformt, über die die einzelnen Phasen, die durch die einzelnen Leiterstreifen gebildet sind, elektrisch bestromt werden. Die ringförmigen Leiterstreifen sind in der Verschalteplatte radial nebeneinander und gegeneinander isoliert angeordnet. Erfindungsgemäß sind die Leiterstreifen in ringförmige Kanäle eingefügt, die axial nach unten offen sind. Dabei weist der Querschnitt der Leiterstreifen in Axialrichtung eine höhere Erstreckung auf, als in Radialrichtung. Damit die Verschalteplatte, und damit die Schneid-Klemm-Elemente exakt zu den Aufnahmetaschen positioniert werden, sind an der Isolierlamelle Zentrierpins angeformt, die sich in Axialrichtung erstrecken. Entsprechend sind an der Verschalteplatte Zentrieröffnungen in Axialrichtung ausgebildet, in die die Zentrierstifte axial eingreifen. Nach dem Zentrieren und dem axialen Fügen der Verschalteplatte durchgreifen die Zentrierpins die als Durchgangsöffnungen ausgebildete Zentrieraufnahmen vollständig. Daher können die freien Enden der Zentrierpins nach dem Fügen der Verschalteplatte plastisch umgeformt werden, um einen Formschluss zu bilden. Dadurch ist die Verschalteplatte zuverlässig axial auf dem Statorgrundkörper fixiert. Die plastische Materialumformung kann besonders einfach durch ein Warmverprägen der aus Kunststoff hergestellten Zentrierpins durchgeführt werden.

Ein solcher Stator eignet sich besonders für eine elektrische Maschine, bei dem der Stator in ein Motorgehäuse axial eingeschoben wird. Dabei sind beidseitig des Stators Lagerdeckel am Motorgehäuse angeordnet, in denen der Rotor aufgenommen ist. Die elektrische Maschine ist beispielsweise als Innenläufer ausgebildet, so dass der Rotor im inneren Hohlraum des Stators drehbar ist. Die Verschalteplatte ist bevorzugt mit einer Ansteuerelektronik verbunden, die die elektrische Kommutierung des Stators regelt. Ein solcher EC-Motor kann besonders vorteilhaft zum Verstellen beweglicher Teile oder als Drehantrieb für Komponenten im Kraftfahrzeug verwendet werden.

Mit dem erfindungsgemäßen Nadelwickelverfahren kann die Wickelzeit pro Stator reduziert werden. Dabei wird als Isolierlamelle bevorzugt ein separat gefertigtes Bauteil - insbesondere ein Kunststoffspritzgussteil - axial auf die Stirnseite des Statorkörpers gepresst. Nachdem ein Drahtanfang an der Isolierlamelle befestigt ist, werden alle Statorzähne in Umfangsrichtung der Reihe nach mit einer Einzelspule bewickelt. Die Verbindungsabschnitte zwischen den Einzelspulen verlaufen radial durch die Aufnahmetaschen nach außen und werden an der radialen Außenseite der Führungselemente bis zum nächsten Statorzahn in Umfangsrichtung geführt. Dabei wird der Wicklungsdraht von der raidalen Außenseite durch eine radiale Freisparung wieder radial nach innen zum Statorzahn geführt. Nach dem fertigen Bewickeln des Statorgrundkörpers wird die Verschalteplatte axial derart aufgepresst, dass die Schneid-Klemm-Elemente der Verschalteplatte axial in die Aufnahmetaschen eingreifen, um die Wicklungsdrähte direkt elektrisch zu kontaktieren.

Zum Bewickeln eines Statorzahns ist die Wickelnadel bevorzugt radial nach außen gerichtet und verläuft während dem Wickeln schräg durch die Statornuten. Ist ein Statorzahn fertig bewickelt, kann die Wickelnadel vorteilhaft nach oben verkippt werden und radial nach außen über die Aufnahmetaschen hinaus geführt werden. Dabei ist die Wickelnadel axial oberhalb der Aufnahmetasche angeordnet und wird erst wieder axial abgesenkt, nachdem die Wickelnadel radial über den Außenumfang der Isolierlamelle hinaus geführt ist. Durch das axiale Absenken wird der Wickeldraht in die beiden Schlitze der Aufnahmetasche eingefügt und darin verklemmt. Anschließend wird die nach wie vor verkippte Nadel in Umfangsrichtung an der Außenseite der Führungselemente in Umfangsrichtung geführt, bis sie die nächste Freisparung erreicht. Hier kann die Wickelnadel radial durch die Freisparung radial nach innen geführt werden, ohne axial angehoben zu werden, da die Freisparung in Umfangsrichtung breiter ausgebildet ist als die Wickelnadel. Nachdem die Wickelnadel durch die Freisparung radial nach innen geführt ist und den Statorzahn erreicht, wird die Wickelnadel wieder zurückgekippt, so dass sie in Radialrichtung ausgerichtet ist. In dieser Position wird sie um den nächsten Statorzahn geführt, um die nächste Einzelspule zu wickeln. Nach diesem Verfahren kann ein Statorzahn nach dem anderen bewickelt werden, wobei der Verbindungsdraht sich jeweils nur über den Umfangsbereich zweier unmittelbar benachbarter Statorzähne erstreckt. Auf diese Weise kann der komplette Stator mit nur einem einzigen Wickeldraht vollständig durchgewickelt werden, wobei die Verbindungsdrähte sehr zuverlässig und kurz geführt werden, ohne parallel zu anderen Wicklungsdrähten zu verlaufen oder andere Wicklungsdrähte zu kreuzen. Dadurch ist ein solcher Stator auch sehr robust gegen hohe Schüttelbelastung.

### Kurze Beschreibung der Zeichnungen

Ausführungsbeispiele der Erfindung sind in den Zeichnungen dargestellt und in der nachfolgenden Beschreibung näher erläutert.

Es zeigen:
- Fig. 1: eine Draufsicht auf einen Stator, nachdem ein erster Statorzahn bewickelt ist,
- Fig. 2: eine Detailansicht der Drahtführung zwischen zwei Spulen,
- Fig. 3 und 4: zwei Varianten für die Befestigung des Wicklungsdrahtanfangs/-endes,
- Fig. 5: das Aufsetzen einer Verschalteplatte auf den bewickelten Stator und
- Fig. 6: eine Schnittdarstellung durch die Befestigungsvorrichtung der Verschalteplatte auf dem Stator.

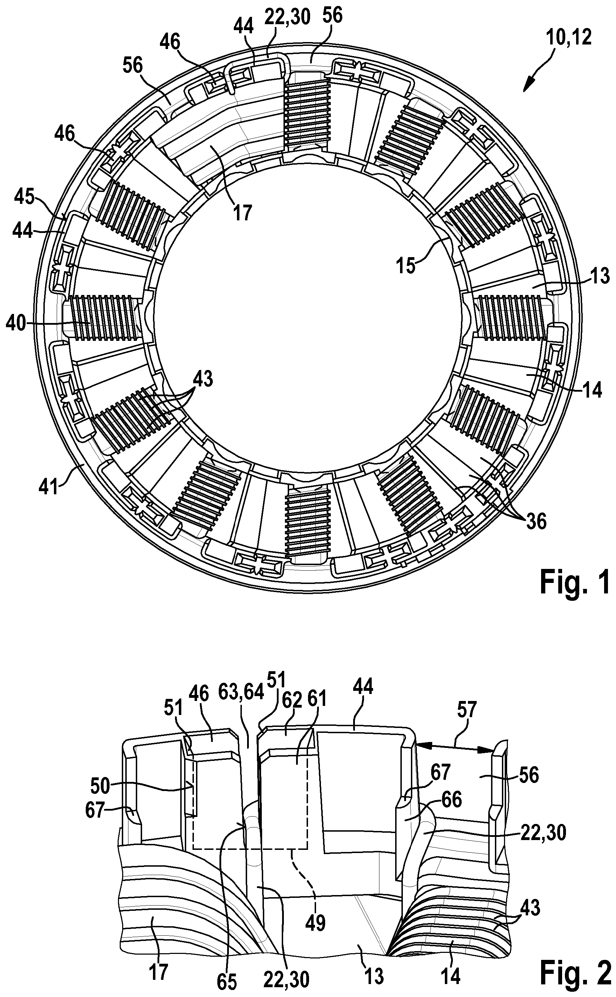

In Fig. 1 ist ein Stator 10 dargestellt, der einen in Umfangsrichtung 2 geschlossenen Rückschlussring 38 aufweist, an dem radiale Statorzähne 14 angeformt sind. Bei dieser Ausführung weisen die Statorzähne 14 radial nach innen, so dass innerhalb der Statorzähne 14 ein nicht dargestellter Rotor gelagert werden kann, der als Innenläufer vom Stator 10 angetrieben wird. Der Stator 10 ist aus einzelnen Blechlamellen 36 zusammengesetzt, die in Axialrichtung 3 übereinander gestapelt und zu einem gemeinsamen Lamellenpaket 35 verbunden sind. Die Blechlamellen 36 sind bevorzugt ausgestanzt, so dass die Statorzähne 14 einstückig mit dem Rückschlussring 38 ausgebildet sind. Das Lamellenpaket 35 bildet den Statorgrundkörper 34, der in einer alternativen Ausführung auch einstückig ohne Blechlamellen 36 ausgebildet sein kann. In Fig. 1 sind die einzelnen Blechlamellen 36 in Umfangsrichtung 2 geringfügig gegeneinander verdreht, so dass die Statorzähne 14 nicht parallel zur Axialrichtung 3 verlaufen, sondern in Umfangsrichtung 2 verschränkt ausgebildet sind. An einer ersten axialen Stirnseite 39 des Statorgrundkörpers 34 ist eine Isolierlamelle 40 angeordnet, die bevorzugt die Stirnseite 39 vollständig mit einem isolierenden Material überdeckt. Bevorzugt ist die Isolierlamelle 40 als Kunststoffspritzgussteil ausgebildet, das axial auf den Statorgrundkörper 34 gepresst ist. Die Statorzähne 14 weisen an ihren radialen Enden einen Zahnkopf 15 auf, der in Umfangsrichtung 2 breiter ausgebildet ist, als der eigentliche Statorzahn 14 im radialen Bereich, der bewickelt wird. Die Isolierlamelle 40 weist im Bereich des Zahnkopfes 15 in Axialrichtung 3 und in Umfangsrichtung 2 einen Überstand 33 auf, der die Spule 17 auf dem Statorzahn 14 hält. Über die Erstreckung des Statorzahns 14 in Radialrichtung 4 sind in der Isolierlamelle 40 Rillen 43 ausgeformt, in die der Wicklungsdraht 22 eingelegt wird. Radial außen weist die Isolierlamelle 40 einen geschlossenen Umfang 41 auf, an dem Führungselemente 44 angeformt sind, die die Verbindungsabschnitte 30 des Wickeldrahts 22 zwischen den einzelnen Spulen 17 führen. Die Führungselemente 44 erstrecken sich in axialer Richtung 3, wobei der Wicklungsdraht 22 in Radialrichtung 4 nach außen geführt wird, um an der radialen Außenseite 45 der Führungselemente 44 in Umfangsrichtung 2 geführt zu werden. Am geschlossenen Umfang 41 der Isolierlamelle 40 sind des Weiteren Aufnahmetaschen 46 ausgebildet, in die der Wicklungsdraht 22 eingelegt wird, um mit Schneid-Klemm-Elementen 70 verbunden zu werden. Die Aufnahmetaschen 46 weisen in Umfangsrichtung 2 eine größere Abmessung auf, als in Radialrichtung 4. Bevorzugt sind alle Aufnahmetaschen 46 auf dem gleichen Radius bezüglich der Statorachse angeordnet. Wie aus Fig. 1 ersichtlich ist, sind die Aufnahmetaschen 46 bevorzugt im Bereich von Statorlnuten 16 zwischen den Statorzähnen 14 angeordnet. Dabei ist jedem Statorzahn 14 genau eine Aufnahmetasche 46 zugeordnet, wobei eine zusätzliche erste Aufnahmetasche 48 für den Wicklungsdrahtanfang 28 angeordnet ist. In Fig. 1 ist der Spulendrahtanfang 28 nicht dargestellt, sondern lediglich schematisch das Wickeln einer einzigen Spule 17. Die Spule 17 wird mittels einer Düse 54 einer Nadelwickelvorrichtung um den Statorzahn 14 gewickelt. Nach dem fertigen Bewickeln einer Spule 17 wird der Wicklungsdraht 22 durch die Aufnahmetasche 46 radial nach außen hindurch geführt und an der radialen Außenseite 45 der Führungselemente 44 in Umfangsrichtung 2 zum nächsten Statorzahn 14 geführt. Hierzu wird der Wicklungsdraht 22 durch eine Freisparung 56 zwischen den Führungselementen 44 wieder radial nach innen zum nächsten Statorzahn 14 geführt. Dabei hat die Freisparung 56 eine Breite 57 in Umfangsrichtung 2, die größer ist, als die Breite der Düse 54 in Umfangsrichtung 2. Dadurch kann der Wicklungsdraht 22 radial durch die Freisparung 56 mittels der Düse 54 gelegt werden, ohne dass die Düse 54 axial über die Führungselemente 44 angehoben werden muss.

In Fig. 2 ist eine vergrößerte Ansicht der Drahtführung zweier benachbarter Spulen 17 dargestellt. Die Aufnahmetasche 46 weist eine erste radial innere Taschenwand 61 und eine zweite radial äußere Taschenwand 62 auf. Die erste und die zweite Taschenwand 61, 62 sind etwa parallel zueinander angeordnet. Beide Taschenwände 61, 62 weisen einen axialen Schlitz 63 auf, der jeweils als radiale Durchgangsöffnung 64 ausgebildet ist. Die zweite radiale Taschenwand 62 bildet gleichzeitig auch eine radiale Außenseite 45 der Führungselemente 44. Dabei bildet hier das Führungselement 44 eine Verlängerung der zweiten radialen Taschenwand 62 in Umfangsrichtung 2. An das Führungselement 44 schließt sich in Umfangsrichtung 2 die Freisparung 56 an, wobei die Freisparung 56 eine Seitenwand 66 aufweist, die radial zur radialen Außenseite 45 des Führungselements 44 verläuft. Der Wicklungsdraht 22 wird entlang der Seitenwand 66 radial nach innen geführt und um den nächsten Statorzahn 14 gewickelt. In einer bevorzugten Ausführung werden jeweils die unmittelbar benachbarten Statorzähne 14 unmittelbar nacheinander bewickelt, so dass sich der Verbindungsdraht 30 zwischen zwei einzelnen Spulen 17 jeweils nur über die Statornut 13 in Umfangsrichtung 2 erstreckt. Bei dieser Ausführung ist die axiale Ausdehnung des Führungselement 44 gleich groß, wie die axile Ausdehnung der Aufnahmetasche 46, um letztere mechanisch zu stabilisieren. Die Seitenwand 66 der Freisparung 56 ist in Fig. 2 abgesenkt und weist hierzu eine axiale Stufe 67 auf. Der axiale Schlitz 63 der ersten und/oder zweiten Taschenwand 61, 62 weisen nach unten hin eine Verjüngung auf, so dass der Wicklungsdraht 22 beim Einfügen in den Schlitz 63 in einer definierten Position verklemmt wird. Eine Grundfläche 49 der Aufnahmetasche 46 ist axial tiefer angeordnet, als das untere Ende der Schlitze 63, damit das korrespondierende Schneid-Klemm-Element 70 sich in Axialrichtung 3 über den Wicklungsdraht 30 hinaus bis zur Taschengrundfläche 49 erstrecken kann. Die Schlitze 63 weisen an ihrem axial offenen Ende eine Einführphase 68 auf, damit der Wicklungsdraht 22 leichter eingeführt werden kann. Ebenso sind an Innenseiten 50 der Aufnahmetasche 46 Fügehilfen 51 ausgeformt, beispielsweise als Schrägen, die die Schneid-Klemm-Elemente 70 in der Aufnahmetasche 46 zentrieren.

In einer bevorzugten Ausführung wird der gesamte Stator mit einem einzigen ununterbrochenen Wicklungsdraht 22 durchgewickelt. Dabei weist der Wicklungsdraht 22 nur genau einen Wicklungsdrahtanfang 28 und genau ein Wicklungsdrahtende 29 auf.

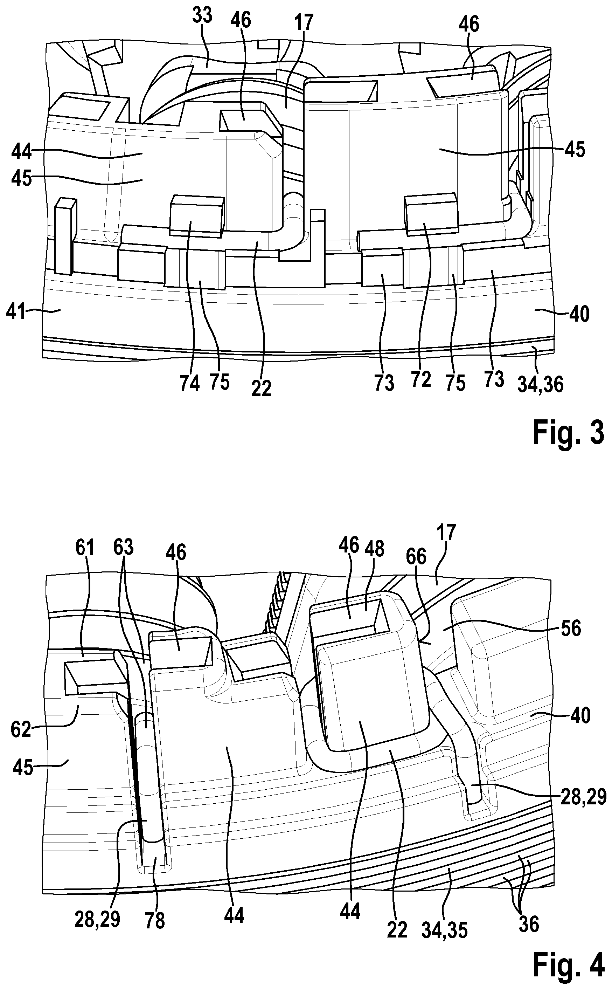

In Fig. 3 ist nun dargestellt, wie solch ein Wicklungsdrahtanfang/-ende 28, 29 an der Isoliermaske 40 fixiert ist. Dazu sind an der Isoliermaske 40 Rastnasen 72 ausgeformt, zwischen denen der Wicklungsdraht 22 eingeklemmt ist. In Fig. 3 wird der Wicklungsdraht 22 radial durch die Aufnahmetasche 46 nach außen geführt und verläuft in Umfangsrichtung 2 an der radialen Außenseite 45. Der Wicklungsdraht 22 wird dabei in Umfangsrichtung 2 zwischen der Rastnase 72 und axial gegenüberliegenden Anschlagsflächen 73 eingeklemmt. Dabei bilden die Anschlagsflächen 73 im Umfangsbereich der Rastnase 72 eine Aussparung 75, so dass der Wicklungsdrahtanfang 28, bzw. das Wicklungsdrahtende 29 zwischen der Rastnase 72 und den Anschlagsflächen 73 verkantet, und somit fest fixiert ist. Die radiale Ausdehnung der Rastnase 72 und insbesondere ebenfalls der Anschlagsflächen 73 ist größer als der Durchmesser des Wicklungsdrahts 22. Des Weiteren weist die Rastnase 72 eine Schrägung 74 auf, über die ein Motorgehäuse beim Fügen über den Stator 10 gleitet. Dadurch wird gewährleistet, dass der Wicklungsdrahtanfang 28 und/oder das Wicklungsdrahtende 29 radial nicht am Motorgehäuse anliegt, sondern durch die Rastnase 72 bzw. die Anlageflächen 73 radial von der Innenwand des Motorgehäuses beabstandet ist.

In einer alternativen Ausführung gemäß Fig. 4 wird der Wicklungsdrahtanfang 28 und/oder das Wicklungsdrahtende 29 in axial verlaufende Spalte 78 in der Isolierlamelle 40 eingefügt. Die Axialspalte 78 weisen eine radiale Tiefe auf, die größer ist als der Durchmesser des Wicklungsdrahts 22. Dadurch ist der ringförmige Umfang 41 der Isolierlamelle 40 radial weiter außen angeordnet als die freie Drahtenden 28, 29. Somit wirkt der radial äußere Umfang 41 als Abstandshalter zwischen den freien Drahtenden 28, 29 und der Innenseite des Motorgehäuses. Bei den Ausführungen gemäß Fig. 3 und 4 ist für den Wicklungsdrahtanfang 28 eine zusätzliche eine einzige zweite Aufnahmetasche 48 an der Isolierlamelle 40 ausgebildet, die unmittelbar benachbart zur Aufnahmetasche 46 angeordnet ist, durch die das Wicklungsdrahtende 29 nach dem Bewickeln der letzten Spule 17 geführt wird. Bei der Ausführung in Fig. 4 ist der Wicklungsdrahtanfang 28 beispielsweise zusätzlich um den Umfang der zweiten Aufnahmetasche 48 herumgewickelt, um diesen sicher an der Isolierlamelle 40 zu befestigen. Zur besseren Isolation der freien Enden 28, 29 des Wicklungsdrahts 22, können auch nicht dargestellte axiale Laschen der Verschalteplatte 52 in die Axialspalte 78 eingreifen, um eine Isolationsschicht radial zwischen den Enden 28, 29 des Wicklungsdrahts 22 und der Innenseite des Motorgehäuses zu bilden.

Die erste Aufnahmetasche 48 kann auch axial versetzt zu den anderen Aufnahmetaschen 46 angeordnet sein, bzw. eine unterschiedliche axiale Erstreckung aufweisen.

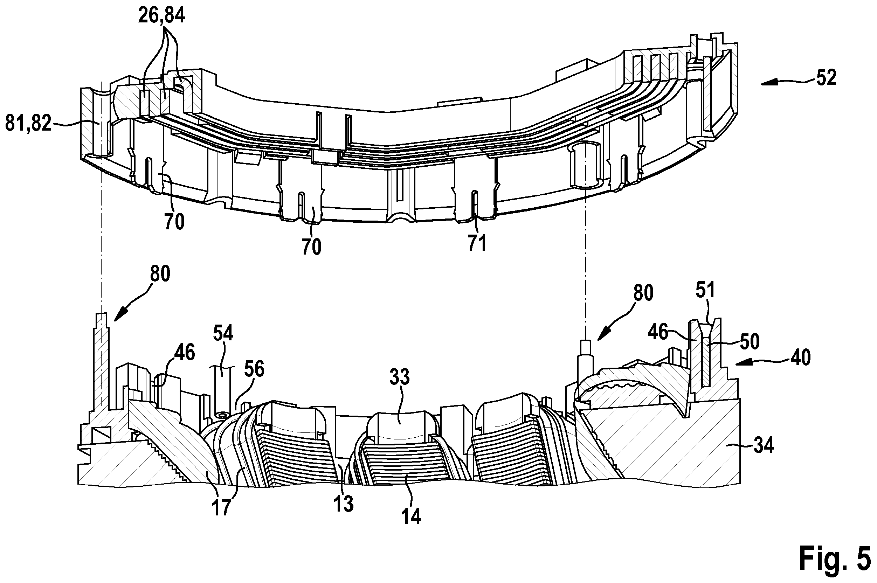

In Fig. 5 ist ein fertig bewickelter Stator dargestellt, auf den nun die Verschalteplatte 52 axial gefügt wird. Dazu sind an der Isolierlamelle 40 sich axial erstreckende Zentrierpins 80 angeformt, die in korrespondierende Zentrieraufnahmen 81 in der Verschalteplatte 52 eingreifen. Die Zentrieraufnahmen 81 sind als axiale Durchgangslöcher 82 ausgebildet. Beim axialen Fügen der Verschalteplatte 52 werden durch die Zentrierstifte 80 und die Zentrieraufnahmen 81 die Schneid-Klemm-Elemente 70 exakt zu den Aufnahmetaschen 46 positioniert. Die Schneid-Klemm-Elemente 70 sind hier an ringförmigen Leitern 84 angeordnet, die elektrisch isoliert in die Verschalteplatte 52 eingefügt sind. Beispielsweise sind die einzelnen Leiter 84 den verschiedenen Phasen 26 zugeordnet, so dass beispielsweise mehrere Spulen 17 durch einen Leiter 84 miteinander zu einer Phase 26 verbunden werden. Die Leiter 84 sind hier als Stanz-Biege-Teile ausgebildet, an denen die Schneid-Klemm-Elemente 70 einstückig angeformt sind. Die Leiter 84 sind auf verschiedenen Radien in der Verschalteplatte 52 angeordnet, wobei bevorzugt die Schneid-Klemm-Elemente 70 derart radial umgebogen sind, dass alle Schneid-Klemm-Elemente 70 auf dem gleichen Radius der Aufnahmetaschen 46 angeordnet sind. Die Schneid-Klemm-Elemente 70 weisen eine größere Breite in Umfangsrichtung 2 auf, als in Radialrichtung 4. Mittig bezüglich der Umfangsrichtung 2 ist an den Schneid-Klemm-Elementen 70 ein Klemmsitz 71 ausgeformt, der beim axialen Fügen über den Wicklungsdraht 22 innerhalb der Aufnahmetasche 46 geschoben wird und dadurch eine Schneid-Klemm-Verbindung ausbildet, die elektrisch leitfähig ist. Die Schneid-Klemm-Elemente 70 werden in die Aufnahmetaschen 46 derart eingepresst, dass sie sich selbst bezüglich des Wicklungsdrahts 22 zentrieren und beispielsweise mittels angeformten Rasthaken an der Innenseite 50 der Aufnahmetaschen 46 verklemmen.

In Fig. 5 sind beispielsweise drei separate Leiter 84 für die drei Phasen U, V, W in der Verschalteplatte 52 eingefügt. Die einzelnen Phasen 26 können optional in einer Dreieckschaltung oder einer Sternpunktschaltung miteinander verschaltet sein, wobei an der Verschalteplatte 52 beispielsweise drei Phasenanschlusskontakte angeordnet sind, um die Spulen 17 zu bestromen. Schematisch ist die Wickeldüse 54 dargestellt, die in Umfangsrichtung 2 so schmal ist, dass sie radial durch die Freisparung 56 geführt werden kann, um den Wicklungsdraht 22 in der Freisparung 56 abzulegen.

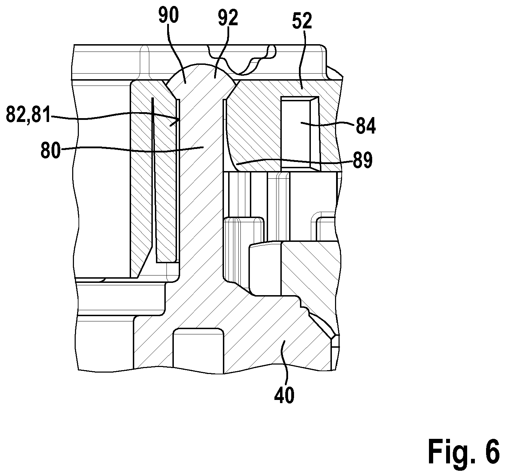

In der Detailzeichnung gemäß Fig. 6 ist die Verschalteplatte 52 axial vollständig auf den bewickelten Stator 10 gefügt. Im Schnitt durch die Zentrieraufnahme 81 ist eine Einführphase 89 erkennbar, über die Bauteil- und Prozesstoleranzen ausgeglichen werden. Nach dem vollständigen axialen Einfügen der Zentrierstifte 80 in die korrespondierenden Zentrieraufnahmen 81 wird ein axialer Endbereich 90 der Zentrierstifte 80 plastisch umgeformt, um einen Formschluss bezüglich der Axialrichtung 3 zu bilden. Die Zentrierstifte 80 sind hier einstückig mit der Isolierlamelle 40 als Kunststoffspritzgussteil ausgebildet. Dadurch können die Endbereiche 90 mittels Warmverstemmen umgeformt werden, so dass sich am Endbereich 90 ein Stiftkopf 92 ausbildet, der einen größeren Durchmesser hat, als die Zentrieraufnahmen 81. Dadurch ist die Verschalteplatte 52 axial zuverlässig mit der Isolierlamelle 40 verbunden.

In einer alternativen Ausführung kann der Stator 10 auch ohne Verschränkung der Statorzähne 14 ausgeführt sein, so dass sich die Statorzähne 14 parallel zur Statorlängsachse erstrecken. In einer weiteren Variante kann der Stator 10 für einen Außenläufermotor verwendet werden, bei dem sich die Statorzähne 14 vom Rückschlussring 38 radial nach außen erstrecken, und der Rotor radial außerhalb des Stators 10 angeordnet ist.

Es sei angemerkt, dass hinsichtlich der in den Figuren und in der Beschreibung gezeigten Ausführungsbeispiele vielfältige Kombinationsmöglichkeiten der einzelnen Merkmale untereinander möglich sind. So kann beispielsweise die konkrete Ausbildung, die Anordnung und Anzahl der Spulen 17, sowie die Ausbildung und Anzahl der Aufnahmetaschen 46 , 48 entsprechend variiert werden. Die Aufnametaschen 46 und die Führngselemente 44 können unmittelbar in eine qn den Statorgrundkörper 34 angespritzte Isolationsmaske oder in eine separat gefertigte Isolierlamelle 40 angeformt werden, die auf den Statorgrundkörper 14 aufgesetzt wird. Ebenso kann die Lage und Ausbildung der Schneid-Klemm-Elemente 70 und die Schnittstelle zur Elektronikeinheit den Anforderungen der elektrischen Maschine 12 und den Fertigungsmöglichkeiten angepasst werden. Mittels der erfindungsgemäßen Schneid-Klemm-Verbindung können in der Verschalteplatte 52 unterschiedliche Verschaltungen realisiert werden, beispielsweise eine Dreiecks- oder eine Sternschaltung, wobei die einzelnen Spulen 17 parallel oder seriell zueinander gewickelt werden können. Die Erfindung eignet sich in besonderer Weise für den Drehantrieb von Komponenten oder die Verstellung von Teilen im Kraftfahrzeug, ist jedoch nicht auf diese Anwendung beschränkt.

## Patentansprüche

1. Stator (10) für eine elektrische Maschine (12), mit einem Statorgrundkörper (34), der radiale Statorzähne (14) zur Aufnahme von Spulen (17) einer elektrischen Wicklung (16) aufweist, und die Spulen (17) mit einem ununterbrochenen Wicklungsdraht (30) durchgewickelt sind, wobei auf einer Stirnseite (39) des Statorgrundkörpers (34) eine Isolierlamelle (40) mit Führungselementen (44) für den Wicklungsdraht (22) zwischen den Spulen (17) angeordnet ist, wobei der Stator (10) Schneid-Klemm-Elemente (70) aufweist und wobei jeder Spule (17) mindestens eine Aufnahmetasche (46) für ein Schneid-Klemm-Element (70) auf der Isolierlamelle (40) zugeordnet ist, in die der ununterbrochen durchgewickelte Wicklungsdraht (22) zur Verschaltung der einzelnen Spulen (17) eingelegt ist, **dadurch gekennzeichnet, dass** die Schneid-Klemm-Elemente (70) an ringförmigen Leiterstreifen (84) angeformt sind, die in einer Verschalteplatte (52) aus Kunststoff eingefügt sind, und die Schneid-Klemm-Elemente (70) der Leiterstreifen (84) axial über die Wicklungsdrähte (22) in den Aufnahmetaschen (46, 47) gesteckt sind, um die Spulen (17) zu einzelnen Phasen (26) zu verschalten, wobei die ringförmigen Leiterstreifen (84) in der Verschalteplatte (52) radial nebeneinander und gegeneinander isoliert angeordnet sind, und die Leiterstreifen (84) in ringförmige Kanäle eingefügt sind, die axial nach unten offen sind, wobei der Querschnitt der Leiterstreifen (84) in Axialrichtung eine höhere Erstreckung aufweist, als in Radialrichtung,
wobei an der Isolierlamelle (40) axiale Zentrierpins (80) angeformt sind, die in korrespondierende Zentrieraufnahmen (81) in der Verschalteplatte (52) eingreifen, wobei die Zentrieraufnahmen (81) als Durchgangslöcher (82) ausgebildet sind, und das axiale Ende (92) der Zentrierpins (80) mittels Warmverstemmen umgeformt ist, um einen Formschluss mit der Verschalteplatte (52) zu bilden.

2. Stator (10) nach Anspruch 1, **dadurch gekennzeichnet, dass** genau einer der Spulen (17) eine erste Aufnahmetasche (46) und eine zusätzliche zweite Aufnahmetasche (48) für den Wicklungsdrahtanfang (28) zugeordnet ist, und alle weiteren Spulen (17) jeweils nur genau eine Aufnahmetasche (46) zugeordnet ist.

3. Stator (10) nach Anspruch 1 oder 2, **dadurch gekennzeichnet, dass** der Wicklungsdraht (22) durch die Aufnahmetasche (46) radial hindurch geführt ist und durch eine benachbarte Freisparung (56) wieder radial zurück zu der in Umfangsrichtung (2) unmittelbar benachbarten Spule (17) geführt ist.

4. Stator (10) nach einem der vorhergehenden Ansprüche, **dadurch gekennzeichnet, dass** alle Spulen (17) direkt nacheinander auf unmittelbar in Umfangsrichtung (2) benachbarte Statorzähne (14) gewickelt sind, insbesondere mittels Nadelwickeln.

5. Stator (10) nach einem der vorhergehenden Ansprüche, **dadurch gekennzeichnet, dass** die Freisparungen (56) in Umfangsrichtung (2) so breit ausgebildet sind, dass eine Wickeldüse (54) der Nadelwickelvorrichtung radial durch die Freisparung (56) hindurch bewegt werden kann, ohne axial über die Isolierlamelle (40) angehoben zu werden.

6. Stator (10) nach einem der vorhergehenden Ansprüche, **dadurch gekennzeichnet, dass** die Aufnahmetasche (46) zwei sich in Umfangsrichtung (2) erstreckende radiale Wände (61, 62) aufweist, in denen ein radialer Durchbruch (64) als axial nach oben offener Schlitz (63) ausgebildet ist, wobei zumindest ein Schlitz (63) axial nach unten verjüngt ausgebildet ist, um den Wicklungsdraht (22) beim Wickeln in dem Schlitz (63) exakt zu positionieren.

7. Stator (10) nach einem der vorhergehenden Ansprüche, **dadurch gekennzeichnet, dass** sich die radial äußere Wand (62) in Umfangsrichtung (2) vom Schlitz (63) bis zu der benachbarten Freisparung (56) erstreckt und hier radial nach innen verläuft, um eine Seitenwand (66) der Freisparung (56) zu bilden, wobei der Wicklungsdraht (22) an der radial äußeren Wand (62) und an der Seitenwand (66) entlang als Führungselement (44) geführt ist.

8. Stator (10) nach einem der vorhergehenden Ansprüche, **dadurch gekennzeichnet, dass** der Statorgrundkörper (34) aus einzelnen Blechlamellen (36) gestapelt ist, die einen geschlossenen Jochring (38) und daran angeformte radiale Statorzähne (14) aufweisen, wobei insbesondere die einzelnen Blechlamellen (36) in Umfangsrichtung (2) verdreht zueinander angeordnet sind, so dass die Statorzähne (14) in Umfangsrichtung (2) verschränkt ausgebildet sind.

9. Stator (10) nach einem der vorhergehenden Ansprüche, **dadurch gekennzeichnet, dass** der Wicklungsdrahtanfang (28) und/oder das Wicklungsdrahtende (29) radial durch die Aufnahmetaschen (46, 48) geführt sind und an der radialen Außenseite (45) der Isolierlamelle (44) Rastnasen (72) angeformt sind, in die der Wicklungsdrahtanfang (28) und /oder Wicklungsdrahtende (29) eingeklemmt sind, wobei sich insbesondere der Wicklungsdrahtanfang (28) und/oder das Wicklungsdrahtende (29) an der Außenseite (45) in Umfangsrichtung (2) erstreckt und vorzugsweise die Rastnasen (72) den Wicklungsdrahtanfang (28) und/oder das Wicklungsdrahtende (29) radial nach außen überragen.

10. Stator (10) nach einem der vorhergehenden Ansprüche, **dadurch gekennzeichnet, dass** an der radialen Außenseite der Isolierlamelle (40) radiale Vertiefungen (78) in Axialrichtung (3) angeformt sind, in die der Wicklungsdrahtanfang (28) und/oder Wicklungsdrahtende (29) eingeklemmt sind, wobei insbesondere ein radialer äußerer Rand der radialen Vertiefung (78) den Wicklungsdrahtanfang (28) und/oder das Wicklungsdrahtende (29) radial nach außen überragt.

11. Stator (10) nach einem der vorhergehenden Ansprüche, **dadurch gekennzeichnet, dass** die einzelnen Phasen (26) über Phasenanschlüsse an der Verschalteplatte (52) bestromt werden.

12. Elektrische Maschine (12) mit einem Stator (10) nach einem der vorherigen Ansprüchen, **dadurch gekennzeichnet, dass** der Stator (10) in ein zylindrischen Motorgehäuse eingefügt ist, wobei ein Rotor über Lagerschilde des Motorgehäuses innerhalb des Stators (10) gelagert ist, und insbesondere eine Elektronikeinheit zur Ansteuerung der Phasen (26) axial oberhalb der Verschalteplatte (52) angeordnet ist.

13. Verfahren zum Herstellen eines Stators (10) nach einem der vorherigen Ansprüchen, **gekennzeichnet durch** folgende Verfahrensschritte:
- eine Isolierlamelle (40) wird axial auf eine Stirnfläche (39) des Statorgrundkörpers (34) gefügt
- danach werden auf den Statorgrundkörper (34) mittels eines durchgehenden Wicklungsdrahtes (22) Spulen (17) gewickelt, wobei Verbindungsdrähte (30) zwischen den Spulen (17) an einer radialen Außenseite der Isolierlamelle (40) geführt werden
- nach jedem Wickeln einer Spule (17) wird der Wicklungsdraht (22) radial durch eine Aufnahmetasche (46) für ein Schneid-Klemm-Element (70) geführt
- zum Wickeln der nächsten Spule (17) wird der Wicklungsdraht (22) radial durch eine radiale Freisparung (56) zum nächsten Statorzahn (14) geführt
- eine Verschalteplatte (52) wird axial über der Isolierlamelle (40) auf den Statorgrundkörper (34) gefügt, derart, dass die Schneid-Klemm-Elemente (70) axial in die Aufnahmetaschen (46) eingreifen, um den Wicklungsdraht (22) elektrisch zu kontaktieren, und dass die axialen Zentrierpins (80) in die korrespondierenden Zentrieraufnahmen (81) in der Verschalteplatte (52) eingreifen, und das axiale Ende (92) der Zentrierpins (80) mittels Warmverstemmen umgeformt ist, um einen Formschluss mit der Verschalteplatte (52) zu bilden.

14. Verfahren nach Anspruch 13, **dadurch gekennzeichnet, dass**
- der Wicklungsdraht (22) mit einer Wickeldüse (54) einer Nadelwickelvorrichtung gewickelt wird, und die Wickeldüse (54) zum axialen Einlegen des Wicklungsdrahts (22) in die Aufnahmetasche (46) axial über die Isolierlamelle (40) angehoben wird
- und die Wickeldüse (54) insbesondere um einen Winkel verkippt wird, um den Wicklungsdraht (22) an der radialen Außenwand in Umfangsrichtung (2) anzulegen
- und die Wickeldüse durch die radiale Freisparung (56) ohne axiale Höhenbewegung radial nach innen zum nächsten Statorzahn (14) geführt wird
- wobei vorzugsweise unmittelbar benachbarte Statorzähne (14) unmittelbar nacheinander bewickelt werden, so dass sich der Verbindungsdraht (30) zwischen zwei Spulen (17) an der Außenseite (45) in Umfangsrichtung (2) jeweils nur zwischen zwei benachbarten Statorzähnen (14) erstreckt.

## Claims

1. Stator (10) for an electric machine (12), with a stator main body (34) which has radial stator teeth (14) for receiving coils (17) of an electrical winding (16), and the coils (17) are continuously wound with an uninterrupted winding wire (30), wherein an insulating lamination (40) with guide elements (44) for the winding wire (22) between the coils (17) is arranged on an end side (39) of the stator main body (34), wherein the stator (10) has cutting-clamping elements (70) and wherein each coil (17) is assigned at least one receiving pocket (46) for a cutting-clamping element (70) on the insulating lamination (40), into which at least one receiving pocket the winding wire (22) which is continuously wound in an uninterrupted manner is inserted for interconnection of the individual coils (17),
**characterized in that**
the cutting-clamping elements (70) are moulded on annular conductor strips (84) which are fitted in a plastics interconnect plate (52), and the cutting-clamping elements (70) of the conductor strips (84) are plugged axially over the winding wires (22) into the receiving pockets (46, 47) in order to interconnect the coils (17) to form individual phases (26), wherein the annular conductor strips (84) in the interconnect plate (52) are arranged radially next to one another and isolated from one another, and the conductor strips (84) are fitted into annular channels which are open axially downwards, wherein the cross section of the conductor strips (84) in the axial direction has a higher extent than in the radial direction,
wherein axial centring pins (80) are moulded on the insulating lamination (40) and engage into corresponding centring receptacles (81) in the interconnect plate (52), wherein the centring receptacles (81) are designed as through holes (82), and the axial end (92) of the centring pins (80) is deformed by means of hot caulking in order to form a form-fitting connection with the interconnect plate (52).

2. Stator (10) according to Claim 1, **characterized in that** exactly one of the coils (17) is assigned a first receiving pocket (46) and an additional second receiving pocket (48) for the start (28) of the winding wire, and all further coils (17) are each assigned exactly one receiving pocket (46).

3. Stator (10) according to Claim 1 or 2, **characterized in that** the winding wire (22) is guided radially through the receiving pocket (46) and is again guided radially through an adjacent clearance (56) back to the coil (17) which is directly adjacent in the circumferential direction (2).

4. Stator (10) according to one of the preceding claims, **characterized in that** all of the coils (17) are wound directly one after another on stator teeth (14) which are directly adjacent in the circumferential direction (2), in particular by means of needle winding.

5. Stator (10) according to one of the preceding claims, **characterized in that** the clearances (56) are of such a width in the circumferential direction (2) that a winding nozzle (54) of the needle winding device can be moved radially through the clearance (56) without needing to be lifted axially over the insulating lamination (40).

6. Stator (10) according to one of the preceding claims, **characterized in that** the receiving pocket (46) has two radial walls (61, 62) which extend in the circumferential direction (2) and in which a radial aperture (64) is formed as an axially upwardly open slot (63), wherein at least one slot (63) is of axially downwardly tapered form, in order to precisely position the winding wire (22) during winding in the slot (63).

7. Stator (10) according to one of the preceding claims, **characterized in that** the radially outer wall (62) extends in the circumferential direction (2) from the slot (63) to the adjacent clearance (56) and here runs radially inwards in order to form a side wall (66) of the clearance (56), wherein the winding wire (22) is guided along the radially outer wall (62) and the side wall (66) as a guide element (44).

8. Stator (10) according to one of the preceding claims, **characterized in that** the stator main body (34) is stacked from individual sheet metal laminations (36) which have a closed yoke ring (38) and radial stator teeth (14) moulded thereon, wherein in particular the individual sheet metal laminations (36) are arranged rotated with respect to one another in the circumferential direction (2), and therefore the stator teeth (14) are formed in a skewed manner in the circumferential direction (2).

9. Stator (10) according to one of the preceding claims, **characterized in that** the start (28) of the winding wire and/or the end (29) of the winding wire are guided radially through the receiving pockets (46, 48), and latching lugs (72), into which the start (28) of the winding wire and/or end (29) of the winding wire are clamped, are moulded on the radial outer side (45) of the insulating lamination (44), wherein in particular the start (28) of the winding wire and/or the end (29) of the winding wire extends on the outer side (45) in the circumferential direction (2) and preferably the latching lugs (72) project radially outwards beyond the start (28) of the winding wire and/or the end (29) of the winding wire.

10. Stator (10) according to one of the preceding claims, **characterized in that** radial recesses (78) are moulded on the radial outer side of the insulating lamination (40) in the axial direction (3), into which recesses the start (28) of the winding wire and/or end (29) of the winding wire are clamped, wherein in particular a radial outer edge of the radial recess (78) projects radially outwards beyond the start (28) of the winding wire and/or the end (29) of the winding wire.

11. Stator (10) according to one of the preceding claims, **characterized in that** the individual phases (26) are energized via phase connections on the interconnect plate (52).

12. Electric machine (12) having a stator (10) according to one of the preceding claims, **characterized in that** the stator (10) is fitted into a cylindrical motor housing, wherein a rotor is mounted via end shields of the motor housing within the stator (10), and in particular an electronics unit for activating the phases (26) is arranged axially above the interconnect plate (52).

13. Method for producing a stator (10) according to one of the preceding claims, **characterized by** the following method steps:
- an insulating lamination (40) is fitted axially onto an end face (39) of the stator main body (34)
- coils (17) are then wound onto the stator main body (34) by means of a continuous winding wire (22), wherein connecting wires (30) are guided between the coils (17) on a radial outer side of the insulating lamination (40)
- after each winding of a coil (17), the winding wire (22) is guided radially through a receiving pocket (46) for a cutting-clamping element (70)
- for the winding of the next coil (17), the winding wire (22) is guided radially through a radial clearance (56) to the next stator tooth (14)
- an interconnect plate (52) is fitted axially over the insulating lamination (40) onto the stator main body (34) in such a way that the cutting-clamping elements (70) engage axially into the receiving pockets (46) in order to make electrical contact with the winding wire (22), and that the axial centring pins (80) engage into the corresponding centring receptacles (81) in the interconnect plate (52), and the axial end (92) of the centring pins (80) is deformed by hot caulking in order to form a form-fitting connection with the interconnect plate (52).

14. Method according to Claim 13, **characterized in that**
- the winding wire (22) is wound with a winding nozzle (54) of a needle winding device, and the winding nozzle (54) is lifted axially over the insulating lamination (40) in order to axially insert the winding wire (22) into the receiving pocket (46)
- and the winding nozzle (54) is in particular tilted by an angle in order to place the winding wire (22) on the radial outer wall in the circumferential direction (2)
- and the winding nozzle is guided through the radial clearance (56) radially inwards to the next stator tooth (14) without any axial vertical movement
- wherein stator teeth (14) which are directly adjacent are preferably wound directly one after another, such that the connecting wire (30) extends between two coils (17) on the outer side (45) in the circumferential direction (2) in each case only between two adjacent stator teeth (14).

## Revendications

1. Stator (10) pour une machine électrique (12), comprenant un corps de base de stator (34) qui possède des dents de stator radiales (14) destinées à recevoir des bobines (17) d'un enroulement électrique (16), et les bobines (17) étant bobinées avec un fil d'enroulement (30) continu, une lamelle isolante (40) pourvue d'éléments de guidage (44) pour le fil d'enroulement (22) étant disposée entre les bobines (17) sur un côté frontal (39) du corps de base de stator (34), le stator (10) possédant des éléments de coupe et de serrage (70) et chaque bobine (17) étant associée à au moins une poche de réception (46) pour un élément de coupe et de serrage (70) sur la lamelle isolante (40), dans laquelle est inséré le fil d'enroulement (22) enroulé en continu pour interconnecter les bobines (17) individuelles,
**caractérisé en ce que**
les éléments de coupe et de serrage (70) sont façonnés sur des bandes conductrices (84) annulaires qui sont insérées dans une plaque d'interconnexion (52) en matière plastique, et les éléments de coupe et de serrage (70) des bandes conductrices (84) sont enfichés axialement sur les fils d'enroulement (22) dans les poches de réception (46, 47) afin d'interconnecter les bobines (17) aux phases (26) individuelles, les bandes conductrices (84) annulaires étant disposées dans la plaque d'interconnexion (52) radialement les unes à côté des autres et isolées les unes des autres, et les bandes conductrices (84) étant insérées dans des canaux annulaires qui sont ouverts axialement vers le bas, la section transversale des bandes conductrices (84) présentant une extension plus importante dans la direction axiale que dans la direction radiale,
des goupilles de centrage axiales (80) étant façonnées sur la lamelle isolante (40), qui s'engagent dans des logements de centrage (81) correspondants dans la plaque d'interconnexion (52), les logements de centrage (81) étant réalisés sous la forme de trous traversants (82), et l'extrémité axiale (92) des goupilles de centrage (80) étant déformées par estampage à chaud afin de former une liaison par complémentarité de formes avec la plaque d'interconnexion (52).

2. Stator (10) selon la revendication 1, **caractérisé en ce qu'**exactement l'une des bobines (17) est associée à une première poche de réception (46) et à une deuxième poche de réception (48) supplémentaire pour le début du fil d'enroulement (28), et toutes les bobines (17) supplémentaires sont respectivement associées à exactement une poche de réception (46).

3. Stator (10) selon la revendication 1 ou 2, **caractérisé en ce que** le fil d'enroulement (22) passe radialement à travers la poche de réception (46) et est ramené radialement vers la bobine (17) immédiatement adjacente dans la direction circonférentielle (2) à travers une découpe (56) adjacente.

4. Stator (10) selon l'une des revendications précédentes, **caractérisé en ce que** toutes les bobines (17) sont enroulées directement les unes après les autres sur des dents de stator (14) immédiatement adjacentes dans la direction circonférentielle (2), notamment au moyen d'un enroulement par aiguilles.

5. Stator (10) selon l'une des revendications précédentes, **caractérisé en ce que** les découpes (56) sont réalisées suffisamment larges dans la direction circonférentielle (2) de manière à ce qu'une buse d'enroulement (54) du dispositif d'enroulement par aiguilles puisse être déplacée radialement à travers la découpe (56) sans être soulevée axialement au-dessus de la lamelle isolante (40).

6. Stator (10) selon l'une des revendications précédentes, **caractérisé en ce que** la poche de réception (46) possède deux parois radiales (61, 62) qui s'étendent dans la direction circonférentielle (2), dans lesquelles est formée une percée radiale (64) sous la forme d'une fente (63) ouverte axialement vers le haut, au moins une fente (63) étant réalisée de manière à se rétrécir axialement vers le bas afin de positionner exactement le fil d'enroulement (22) dans la fente (63) lors de l'enroulement.

7. Stator (10) selon l'une des revendications précédentes, **caractérisé en ce que** la paroi radiale extérieure (62) s'étend dans la direction circonférentielle (2) depuis la fente (63) jusqu'à la découpe (56) adjacente et suit ici un tracé radial vers l'intérieur afin de former une paroi latérale (66) de la découpe (56), le fil d'enroulement (22) étant guidé le long de la paroi radiale extérieure (62) et de la paroi latérale (66) en tant qu'élément de guidage (44).

8. Stator (10) selon l'une des revendications précédentes, **caractérisé en ce que** le corps de base de stator (34) est empilé à partir de lamelles de tôle (36) individuelles qui présentent un anneau de culasse fermé (38) et des dents de stator radiales (14) façonnées sur celui-ci, les lamelles de tôle (36) individuelles étant notamment disposées de manière torsadée les unes par rapport aux autres dans la direction circonférentielle (2), de sorte que les dents de stator (14) sont de configuration entrelacée dans la direction circonférentielle (2).

9. Stator (10) selon l'une des revendications précédentes, **caractérisé en ce que** le début du fil d'enroulement (28) et/ou la fin du fil d'enroulement (29) sont guidés radialement à travers les poches de réception (46, 48) et que des ergots d'encliquetage (72) sont façonnés sur le côté radial extérieur (45) de la lamelle isolante (44), dans lesquels sont coincés le début du fil d'enroulement (28) et/ou la fin du fil d'enroulement (29), le début du fil d'enroulement (28) et/ou la fin du fil d'enroulement (29) s'étendant notamment au niveau du côté extérieur (45) dans la direction circonférentielle (2) et les ergots d'encliquetage (72) dépassant de préférence le début du fil d'enroulement (28) et/ou la fin du fil d'enroulement (29) radialement vers l'extérieur.

10. Stator (10) selon l'une des revendications précédentes, **caractérisé en ce que** des renfoncements radiaux (78) sont façonnés dans la direction axiale (3) sur le côté radial extérieur de la lamelle isolante (40), dans lesquels sont serrés le début du fil d'enroulement (28) et/ou la fin du fil d'enroulement (29), un bord extérieur radial du renfoncement radial (78) dépassant le début du fil d'enroulement (28) et/ou la fin du fil d'enroulement (29) radialement vers l'extérieur.

11. Stator (10) selon l'une des revendications précédentes, **caractérisé en ce que** les phases (26) individuelles sont alimentées électriquement par le biais de bornes de phase au niveau de la plaque d'interconnexion (52).

12. Machine électrique (12) comprenant un stator (10) selon l'une des revendications précédentes, **caractérisée en ce que** le stator (10) est inséré dans un carter de moteur cylindrique, un rotor étant monté à l'intérieur du stator (10) par l'intermédiaire de flasques du carter de moteur, et une unité électronique destinée à commander les phases (26) est disposée axialement au-dessus de la plaque d'interconnexion (52).

13. Procédé de fabrication d'un stator (10) selon l'une des revendications précédentes, **caractérisé par** les étapes suivantes :
- une lamelle isolante (40) est ajoutée axialement sur une surface frontale (39) du corps de base de stator (34)
- des bobines (17) sont ensuite enroulées sur le corps de base de stator (34) au moyen d'un fil d'enroulement (22) continu, des fils de connexion (30) entre les bobines (17) étant guidés sur un côté radial extérieur de la lamelle isolante (40)
- après chaque enroulement d'une bobine (17), le fil d'enroulement (22) est guidé radialement à travers une poche de réception (46) pour un élément de coupe et de serrage (70)
- pour enrouler la bobine suivante (17), le fil d'enroulement (22) est guidé radialement à travers une découpe (56) radiale vers la dent de stator (14) suivante
- une plaque d'interconnexion (52) est assemblée axialement au-dessus de la lamelle isolante (40) sur le corps de base de stator (34), de telle sorte que les éléments de coupe et de serrage (70) s'engagent axialement dans les poches de réception (46) afin d'établir le contact électrique avec le fil d'enroulement (22), et que les goupilles de centrage axiales (80) s'engagent dans les logements de centrage correspondants (81) dans la plaque d'interconnexion (52), et l'extrémité axiale (92) des goupilles de centrage (80) est déformée par estampage à chaud afin de former une liaison par complémentarité de formes avec la plaque d'interconnexion (52).

14. Procédé selon la revendication 13, **caractérisé en ce que**
- le fil d'enroulement (22) est enroulé avec une buse d'enroulement (54) d'un dispositif d'enroulement par aiguilles, et la buse d'enroulement (54) est soulevée axialement au-dessus de la lamelle isolante (40) afin d'insérer axialement le fil d'enroulement (22) dans la poche de réception (46)
- et la buse d'enroulement (54) est notamment inclinée d'un angle afin d'appliquer le fil d'enroulement (22) contre la paroi extérieure radiale dans la direction circonférentielle (2)
- et la buse d'enroulement est guidée radialement vers l'intérieur à travers la découpe (56) radiale vers la dent de stator suivante (14) sans mouvement axial en hauteur
- les dents de stator (14) immédiatement adjacentes étant de préférence enroulées immédiatement les unes après les autres, de sorte que le fil de connexion (30) entre deux bobines (17) au niveau du côté extérieur (45) s'étend dans le sens circonférentiel (2) respectivement seulement entre deux dents de stator (14) adjacentes.
